Europäisches Patentamt

European Patent Office

Office européen des brevets

(11) Publication number: **0 257 582**
**A2**

# (12) EUROPEAN PATENT APPLICATION

(21) Application number: **87112155.4**

(22) Date of filing: **21.08.87**

(51) Int. Cl.4: **G01N 30/60 , B01D 15/08**

(30) Priority: **21.08.86 CS 6128/86**

(43) Date of publication of application:
**02.03.88 Bulletin 88/09**

(84) Designated Contracting States:
**AT BE CH DE FR GB IT LI NL SE**

(71) Applicant: **Ceskoslovenska akademie ved
Narodni trida 3
Praha 1(CS)**

(72) Inventor: **Porsch, Bedrich, Dipl.-Ing.
Slavikova 14
Praha 3(CS)**
Inventor: **Voslár, Jaroslav
Madridska 26
Praha 10(CS)**
Inventor: **Rosol, Jaroslav, Dipl.-Ing.
Plojharova 3
Praha 6(CS)**
Inventor: **Kubánek, Vladimir, Prof. Ing.
Gromovové 66
Praha 6(CS)**

(74) Representative: **Patentanwälte Beetz sen. -
Beetz jun. Timpe - Siegfried -
Schmitt-Fumian
Steinsdorfstrasse 10
D-8000 München 22(DE)**

(54) Column for preparative liquid chromatography.

(57) The invention relates to a column for the preparative liquid chromatography.

The column is provided with an inlet tube (5) for the injected sample, which is closed at the end with a gauze or fritted plate (6), passes through the centre of a lower terminal (3), and ends at a distance from the lower end of this tube equal to 70 to 90 % of the total length of the column, whereas the lower terminal (3) has at least four openings (7) or a circular slot or two half-slots positioned outside the centre of the terminal on a concentric circle having a diameter ranging between 40 and 70 % of the inner diameter of the column tube (1).

The column operates in such a way, that the mobile phase is introduced into the column through the centre of the upper terminal (2), and the sample is injected into the sorbent through the sample inlet tube (5) after stopping the flow of the mobile phase, whereupon the flow of the mobile phase is restored.

FIG. 1

## Column for preparative liquid chromatography

The invention pertains to a column for preparative liquid chromatography.

The rapid development of the analytical high-pressure liquid chromatography leading to columns with high separation efficiencies increased the interest in preparative columns with similar properties. The reason is that the use of smaller sorbent particles enables, similar to analytical columns, to increase the efficiency of columns substantially (as much as by an order of magnitude), provided the sorbent is sufficiently rigid in order to withstand the required pressure gradient. Among the basic problems to be solved in designing preparative columns are the distribution of mobile phase and injected sample into the column head and the outlet of sample from the column which have to be arranged such as to prevent an additional spreading of the sample zone and thus a decrease in efficiency. Considerable spreading of the injected sample occurs always if a hollow space is formed in the column head where the sample is mixed with the mobile phase; rinsing of this void leads to rather asymmetric zones of sample. The void may arise, for example, by squeezing the sorbent because of the pressure gradient during chromatography or by a slow dissolution of sorbent particles in the mobile phase. These problems become the more evident the larger is the column diameter. The inlet and outlet of mobile phase and sample are mostly realized in the form of a central inlet and outlet of the column. There have been described columns with a conical shape of the inlet and outlet parts and also columns with complex distributors in the inlet and outlet parts which should secure an uniform distribution and collection of a sample from the whole cross-section of the column (for example, Coq B., Cretier G., Rocca J.L., Journal of Chromatography 186 (1979) 457). The solutions with sample inlet into the column head work reliably provided that no void is not formed in the column head. The squeezing of sorbent bed, above all in columns with a large diameter, occurs even with such rigid particles as microparticular silica gel. Packing procedures commonly used for analytical columns which secure enhanced stability of the sorbent bed, i.e. packing with a suspension of particles at pressures up to 50-60 MPa, can be applied for preparative columns only with difficulty. Thus, formation of such a pressure gradient in columns with a diameter of 100 mm would require a very complicated packing equipment, particularly a pump device. Because the operation pressures in the columns are lower by an order of magnitude than the above pressures, at least a 10 times higher pressure resistance of the preparative column would be required in comparison with the operational conditions. Therefore, there is a trend to pack columns with large diameters by simple sedimentation in the gravitation field. This can be easily achieved but without a sufficient guaranty that the packing of particles is stable enough under the pressure gradient during operation of the column, and the risk of formation of voids in the column head is further increased.

Three solutions of this problem are known. According to the first solution, columns are equipped with a sliding piston; the column head, namely its lower part, is formed by a sliding piston which may be displaced in such a way that it always exerts pressure on the column of sorbent and, at the same time, introduces the sample into the sorbent or leads the sample from the sorbent using a suitable distributor, if necessary (cf. DE 30 21 366 A or EP application 40 663). Disadvantages are here the complexity of the piston as such and high requirements on the quality of tubes for columns, because the piston must be perfectly sealed against the outer overpressure. Besides, a considerable force has to be exerted for shifting the piston in order to compensate the inner overpressure, whereby this force increases with increasing diameter.

The second prior art solution consists in manufacturing the column from an elastic material and stabilizing the sorbent column by a radial compression in such a way that no voids can occur (e.g. DE 30 00 475 A). This solution requires a relatively complex equipment for compressing the elastic column and does not completely solve the problem of dissolution of the sorbent and formation of voids during column operation, whereby this problem rapidly grows with increasing column diameter, and therefore it is used only for columns with a smaller diameter.

The third solution is based on the direct injection of a sample into the sorbent bed on the column head either axially (Katz E., Scott R.P.W., J. Chromatography 246 (1982),191) or laterally (Molnar I., Huhn A., Lamer W., International Laboratory 14, No. 3, (1984), 10). Equipments of this type are again complicated and difficult to handle, and the sample inlets often become choked. In addition, two pumps must be used, one for introducing the mobile phase into the column head, and the other for introducing the sample and the mobile phase into the sorbent. If a high efficiency is to be achieved, proper setting of both flow rates is very critical. The described inlets of sample into the sorbent have hitherto been used only in analytical columns. They can obviously be used also for columns with larger diameters, but their complexity would further increase.

It is the object of the invention to overcome the above discussed problems and disadvantages of the prior art and to develop a column for preparative liquid chromatography which has a simpler construction, is easy to handle and has improved inlets for sample and mobile phase.

The above object is achieved according to the claim.

The column according to the invention consists of a tube of cylindrical shape packed with a sorbent and provided on its ends with terminals which seal the column against outer overpressure and in which are attached bolts fixing the terminals on the ends of tube, wherein an inlet tube for injected sample, which is closed at the end with a gauze or fritted plate, passes through the centre of the lower terminal and ends at a distance from the lower end of the column equal to 70 to 90 % of the total length of tube, whereas the lower terminal has at least four openings or a circular slot or two half-slots provided with gauzes or fritted plates, these openings or slots being placed outside the centre of the lower terminal on a concentric circle with a diameter ranging between 40 and 70 % of the inner diameter of the cylindric tube.

An important feature of the invention is the arrangement of the inlets of the sample and mobile phase into the column, according to which the mobile phase is introduced through the upper terminal axially and the sample is injected into the sorbent through an inlet tube for sample after stopping the flow of mobile phase, whereupon the flow of the mobile phase is restored.

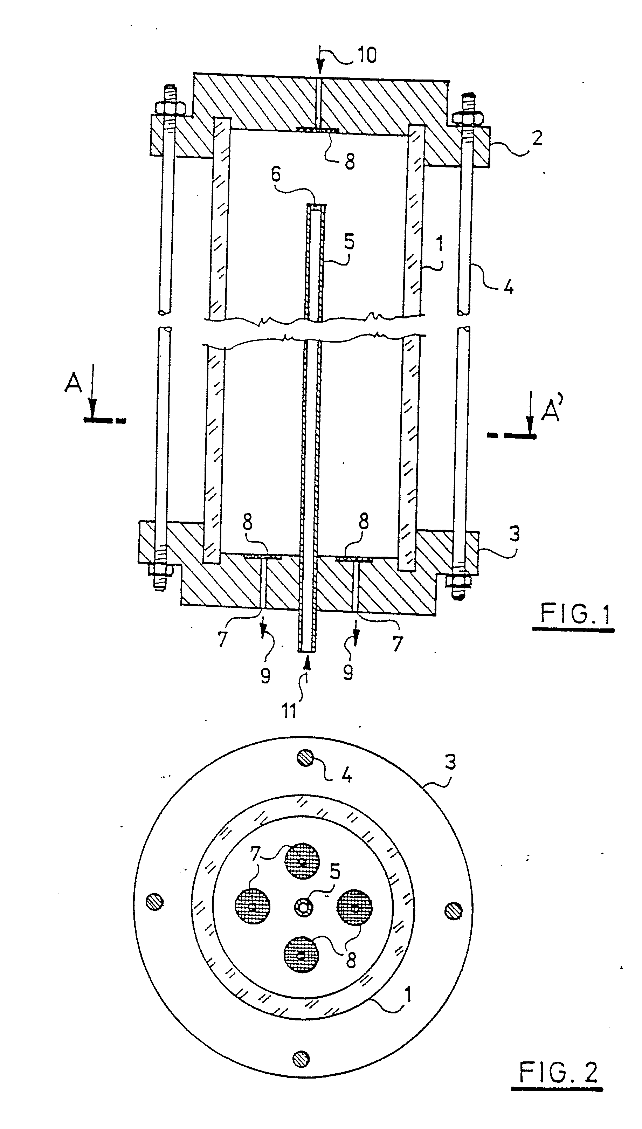

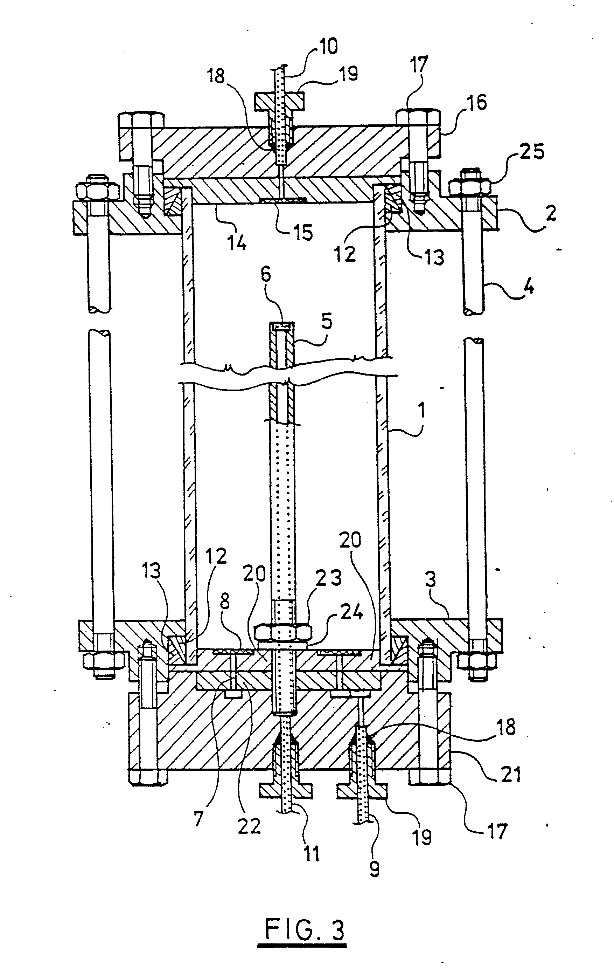

An embodiment of the column according to the invention is shown in the drawings, whereby fig. 1 shows the column in a sectional view, fig. 2 shows a central section according to the section plane A-A' in fig. 1, and fig. 3 shows a sectional view of a column according to the invention with more details.

The column shown in fig. 1 consists of a tube 1 of cylindrical shape which is provided at its ends with an upper terminal 2 and a lower terminal 3. The inlet of mobile phase formed by an inlet capillary 10 and provided with a gauze 8 passes through the centre of the upper terminal 2. An inlet tube 5 for the injected sample provided at the end with a gauze or fritted plate 6 and connected with an inlet capillary 11 for the sample passes through the centre of the lower terminal 3; four openings 7 provided with gauzes 8 and leading the mobile phase out through an outlet capillary 9 are disposed in the lower terminal 3 and placed on a concentric circle having a diameter which is half the inner diameter of the tube 1. The upper terminal 2 and the lower terminal 3 are fixed at the ends of tube 1 with bolts 4.

Fig. 2 shows the arrangement of the openings 7 with gauzes 8, the bolts 4 and the inlet tube 5 provided in the lower terminal 3.

Fig. 3 shows an embodiment of the column according to the invention with more details. The tube 1 is sealed in the upper terminal 2 with a polytetrafluoroethylene sealing ring 12, a stainless-steel sealing ring 13 and a polytetrafluoroethylene sealing piece 14. The lower part of the upper terminal 2 and its upper part are tightened with bolts 17. The inlet capillary 10 for the mobile phase passes through the centre of the sealing piece 14 and is sealed with a polytetrafluoroethylene cone 18 and a bored screw 19. The inlet tube 5 is sealed in the lower terminal 3 with a polytetrafluoroethylene sealing ring 12 and a stainless-steel sealing ring 13 in the same way as in the upper terminal, and with a polytetrafluoroethylene sealing piece 20. The polytetrafluoroethylene sealing piece 20 is provided with openings 7 which are covered with gauzes 8. The channels of openings 7 are formed in the upper part 21 of the lower terminal 3 under a stopper 22, and the outlet capillary 9 for the mobile phase is sealed with a polytetrafluoroethylene cone 18 and the screw 19. The inlet tube 5 for the sample is provided with a fritted plate 6, screwed into the upper part 21 of the lower terminal 3 and sealed with the polytetrafluoroethylene cone 18 and the screw 19. The inlet tube 5 for the sample is tightened from the inner side with a nut 23 with a washer 24. The lower part of the lower terminal 3 and the upper part 21 of this terminal are tightened with bolts 17. The upper terminal 2 and the lower terminal 3 are fixed at the end of the tube 1 with bolts 4 which are screwed together with nuts 25.

The cylindric tube 1 forming the column may be made of glass, stainless steel, or any other material, according to the requirements, e.g. mechanical strength and corrosion resistance, and its diameter is determined by the required separation capacity, whereby the volume is not limited.

The terminal may have an arbitrary design. The sealing according to CS Patent 236 184 can advantageously be used because it allows to utilize the strength of glass approaching theoretical values, is sufficiently simple, and does not require a tube of special quality with respect to its roundness and surface quality.

The openings 7 in the lower terminal 3 serve as outlets for the mobile phase. Connection channels for the outlet of the mobile phase can be provided in the lower terminal 3 so that the mobile phase leaves the column through a single tube. Alternatively, also separate tubes may be used which are connected first behind the column.

A standard six-way valve may advantageously be employed for introduction of the sample, because it enables to switch over the flow of the mobile phase outside the column and, at the same time, to attach an injection branch and to close the column head without stopping a pump. The valve is switched back after injection and thus the flow of mobile phase is restored.

The column according to the invention has numerous advantages if operated in accordance with the described method of sample introduction. The column may be readily packed with a sorbent by simple sedimentation in the gravitation field in such a way, that a tube identical with the tube 1 forming the column is used and both are connected by means of a rubber coupling. Because the sample inlet tube is placed from below, a complicated introduction of an injection system into the sorbent can be omitted. A sorbent layer above the end of the sample inlet tube 5 practically replaces a piston for compression of the sorbent as a consequence of the pressure gradient determined by the height of this layer, the column diameter, the flow rate and the viscosity of the mobile phase and the particle size of the sorbent. If necessary, this layer can be filled up or replaced again by simple sedimentation without influencing the efficiency of the column. This is important above all in cases when the sorbent may be slightly dissolved by the mobile phase as this layer replaces a saturation column in such a case. In addition, this layer also traps contingent impurities from the mobile phase, which again is of importance for the application of columns with large diameters operated with tens and even hundreds of liters of mobile phase, and thus the general requirements on the purity of chromatographic mobile phases may be reduced. If glass tubes are used, the contamination which is often accompanied with a change of sorbent colour may be controlled visually and the sorbent can readily be changed.

Because the openings 7 leading the mobile phase out are placed outside the centre of the lower terminal 3, a substantially better elution of the sample zone occurs from the column circumference, and symmetrical peaks are obtained even with considerable amounts of separated sample.

There is no need to work with two pumps if the described method of sample injection is used. In order to connect two columns according to the invention in a series, the inlet on the head of the second column can be joint with the outlet from the first column so that the injection tube 5 of the second column is not employed. Because the sample, after having passed through the first column, is already diluted in a large volume, a void, if present, in the head of the second column does not or only slightly become evident. If a recycling is to be applied, it is suitable to connect a smaller pump, which returns a sample zone back into the injection system, and the operation may be carried out both at stopped flow of the mobile phase and with flowing mobile phase. Smaller injection volumes (up to 50 ml) may be applied by a syringe, but a small auxiliary pump, pneumatic dosage means and the like are more comfortable for larger injection quantities.

A suitable design of the column according to the invention will now be described in an example with reference to fig. 3.

Example

A column tube 1 with a length of 250 mm, an inner diameter of 43 mm and a wall thickness of 3.5 mm made of a borosilicate glass was used. The upper terminal 2 and the lower terminal 3 were made from stainless steel, and the system according to CS-Patent 236 184 was used for sealing the tube 1. This system consisted of a polytetrafluoroethylene sealing ring 12 a stainless-steel sealing ring 13, and a polytetrafluoroethylene sealing piece 14 through the centre of which passed an inlet capillary 10 for the mobile phase which was separated from the sorbent with a gauze 15. Sealing of the upper terminal 2 was attained by tightening of the lower part of the upper terminal 2 with its upper part 16 by bolts 17. The inlet capillary 10 for the mobile phase was sealed with a polytetrafluoroethylene cone 18 and a bored screw 19 . Sealing of the tube 1 in the lower terminal 3 was the same as with the upper terminal 2, i.e., the polytetrafluoroethylene sealing ring 12 and the stainless-steel sealing ring 13 were used. Four openings 7 were bored in the polytetrafluoroethylene sealing piece 20 on a circle having half the diameter of the sealing piece 20 and covered with gauzes 8. Connecting channels of the openings 7 were formed in the upper part 21 of the lower terminal 3 under a stopper 22, and the outlet capillary 9 for the mobile phase was sealed with the polytetrafluoroethylene cone 18 and the bored screw 19 . The inlet tube 5 for the sample having an inner diameter of 1 mm and an inner length of 200 mm was provided with a fritted plate 6 and screwed into the upper part 21 of terminal 3, and the sample inlet was sealed with the polytetrafluoroethylene cone 18 and the screw 19. The inlet tube 5 was tightened from inside with a nut 23 and a washer 24 both made of stainless steel. The lower part of the lower terminal 3 and the upper part 21of this terminal were in turn tightened with the bolts 17, and sealing of the tube 1 was obtained in this way. The bolts 4 fixing the upper terminal 2 and the lower terminal 3 are tightened with nuts 25.

The mobile phase was introduced into the column during operation through the inlet capillary 10, and a sample was injected into a sorbent, after stopping the flow of the mobile phase, through the inlet tube 5 for sample to which the inlet capillary 11 for sample was connected. Stopping the flow and injection were carried out by means of a six-way valve which allowed to disconnect the inlet capillary 11 for sample with the sample dosage equipment. The flow of the mobile phase was restored after injection by switching over the six-way valve.

The column according to the invention has a much simpler construction than the columns known so far. It may be used for all separation processes and particularly for the separation of biological, biochemical, medical and pharmaceutical substances and systems, e.g., the separation of rare compounds from complex mixtures. It is optimally suited for applications in medicine, pharmacy, organic syntheses, chemical research, biochemistry and biotechnology.

## Claims

Column for the preparative liquid chromatography which consists of a tube of cylindrical shape packed with a sorbent and provided on its ends with terminals sealing the column against an inner overpressure in which bolts are attached fixing the terminals on the ends of the said tube, wherein an inlet tube (5) for an injected sample, which is closed at the end with a gauze or fritted plate (6), passes through the centre of the lower terminal (3) and ends at a distance from the lower end of the column equal to 70 to 90 % of the total length of the column tube (1), whereas the lower terminal (3) has at least four openings (7) or a circular slot or two half-slots provided with gauzes or fritted plates (8), these openings or slots being provided outside the centre of the lower terminal (3) on a concentric circle having a diameter ranging between 40 and 70 % of the inner diameter of the column tube (1) (Fig. 1).

FIG.1

FIG. 2

S 10 90

FIG. 3